# EUROPÄISCHE PATENTSCHRIFT

(11) **EP 2 335 973 B1**
(45) Veröffentlichungstag und Bekanntmachung des Hinweises auf die Patenterteilung: **06.11.2013**
(21) Anmeldenummer: 10010668.1
(22) Anmeldetag: 25.09.2010
(51) Int. Cl.: B60N 3/06, F16B 5/06, F16B 5/12

(54) **Befestigungselemente einer Fußstütze für ein Fahrzeug**
Fastening means of a foot rest for a vehicle
Moyens de fixation de un repose-pieds pour un véhicule

(30) Priorität: 21.12.2009 DE 102009059996
(43) Veröffentlichungstag der Anmeldung: 22.06.2011
(73) Patentinhaber: Volkswagen Aktiengesellschaft, 38440 Wolfsburg (DE)
(72) Erfinder: Schiller, Dirk, 29229 Celle (DE)

(56) Entgegenhaltungen:
- EP-A1- 0 780 268
- EP-A1- 0 860 616
- EP-A2- 1 544 029
- DE-A1-102005 039 936
- US-A- 3 905 712

## Beschreibung

Die vorliegende Erfindung bezieht sich auf eine im Fußraum eines Kraftfahrzeuges radhausseitig angeordnete, konsolenartige Fußstütze gemäß dem Oberbegriff des Patentanspruches 1.

Eine derartige gattungsgemäße Fußstütze ist aus der DE 103 59 766 A1 bekannt, bei der eine flächige Abdeckung mit Hintergriffselementen auf die Auflagefläche eines Halters einer konsolenartigen Fußstütze aufgeschoben und verrastet ist. Vorteilhaft an dieser Verbindung zwischen Fußstütze und Abdeckung ist, dass sie montagegünstig ohne Verwendung von Schrauben auskommt.

Aus der EP 0 860 616 A1 ist eine Verbindungsanordnung für Verkleidungselemente eines Kraftfahrzeuges bekannt. Bei der Verbindungsanordnung ist ein Halter und ein am Halter zu verbindendes erstes Verkleidungselement als Rastpartner zueinander in Rasteingriff. Der Rasteingriff wird mittels eines weiteren Verkleidungsteiles gesichert.

Aufgabe der Erfindung ist es, eine ebenso montagegünstige und ästhetisch anmutende Fußstütze mit Abdeckung vorzuschlagen, die zudem eine hohe Sicherheit gegen Ablösen der Abdeckung zum Beispiel in einem Crashfalle aufweist.

Die Aufgabe ist durch die Merkmale des Patentanspruches 1 gelöst. Vorteilhafte und besonders zweckmäßige Weiterbildungen der Erfindung sind in den Unteransprüchen angeführt.

Gemäß dem kennzeichnenden Teil des Patentanspruches 1 ist der Rasteingriff zwischen den, der Abdeckung und dem Fußstützen-Halter zugeordneten Rastpartnern durch ein, von der Fußstütze separates Zusatzbauteil gesichert. Das Zusatzbauteil ist erfindungsgemäß ein an die Fußstütze angrenzendes Verkleidungsteil, das das jeweilige Rastelement in seiner Verriegelungsposition hält.

Damit kann die zwischen der Abdeckung und dem Fußstützen-Halter gebildete Rastverbindung fertigungstechnisch einfach ohne besondere Maßnahmen zur Sicherung dieser Rastverbindung ausgebildet werden. Das heißt, dass einer der Rastpartner ein nachgiebig, elastisch federnd gestaltetes Rastelement ausführbar ist, das in lösbarem Rasteingriff mit dem korrespondierenden Rastpartner bringbar ist. Das so gestaltete Rastelement kann bei demontiertem Verkleidungsteil in einem einfachen Montage-/Demontageschritt festgelegt oder gelöst werden. Erst mit der Montage des Verkleidungsteils erfolgt dann eine zuverlässige Sicherung der Rastverbindung, bei der das Verkleidungsteil das Rastelement in seiner Verriegelungsposition hält.

Das Rastelement kann als Rasthaken am Fußstützen-Halter ausgebildet sein, während die korrespondierende Rastausnehmung an der Abdeckung vorgesehen sein kann. Alternativ können die als Rastelement und Rasthaken gebildeten Rastpartner auch umgekehrt an der Abdeckung und am Fußstützen-Halter vorgesehen sein.

Zur Verbindung der Abdeckung mit dem Fußstützen-Halter kann das Rastelement in seiner Verriegelungsposition einen Öffnungsrand der Rastaufnehmung hintergreifen. Zum Halten des Rastelementes in seiner Verriegelungsposition kann dabei das Verkleidungsteil ebenfalls in die Rastausnehmung einragen, und das Rastelement in seiner Verriegelungsposition vorspannen.

Für ein solches Vorspannen des Rastelementes in seine Verriegelungsposition kann das Verkleidungsteil mit einem Sperrelement ausgebildet sein, das in Einbaulage gegen das Rastelement drückt. Beispielhaft kann das Sperrelement als Vorsprung an einer Seitenfläche des Innenverkleidungsteils angeformt sein.

Um die Rastverbindungsstelle zwischen der Abdeckung und dem Fußstützen-Halter zusätzlich zu sichern, kann diese auf der vom Fußraum abgewandten Seite des Verkleidungsteils, das heißt sichtgeschützt mit Bezug auf den Fußraum, angeordnet sein.

Beim Zusammenbau kann die Abdeckung mit einer ersten Montagebewegung zunächst in eine Steckverbindung mit dem Fußstützen-Halter gebracht werden. Die Abdeckung ist hierbei in etwa hochkant zu einer dem Fußraum zugewandten Basiswand des Fußstützen-Halters angeordnet. Die Steckverbindung zwischen dem Fußstützen-Halter und der Abdeckung kann eine Kippachse bilden, um die die hochkant angeordnete Abdeckung in einer zweiten Montagebewegung auf den Fußstützen-Halter geschwenkt werden kann. Anschließend kann das Verkleidungsteil montiert werden, wodurch die Rastverbindung zwischen dem Fußstützen-Halter und der Abdeckung gesichert ist. Bei dem oben beispielhaft angegebenen Zusammenbau ist die in den Montageschritten gewählte Zusammenbaurichtung ohne Relevanz, solange die erfindungsgemäße Verriegelung und/oder Sicherung gewährleistet ist.

Die Abdeckung kann eine Seitenwand aufweisen, an der die mit dem Halter zusammenwirkende Steckverbindung vorgesehen ist. Ferner kann an der der Seitenwand gegenüberliegenden Längsseite der Fußstütze die Rastverbindung zwischen der Abdeckung und dem Halter angeordnet sein, deren Montagerichtung im Wesentlichen senkrecht zur Steckverbindungsrichtung ausgelegt ist.

Durch die Kombination der Steckverbindung und der Rastverbindung, die aber in unterschiedlichen Wirkrichtungen angeordnet sind, wird neben einer einfachen Montage sichergestellt, dass bei auf die Trittfläche wirkenden Stütz- oder Aufprallkräften die Verbindung weitgehend erhalten bleibt. Zudem bildet die Seitenwand eine ästhetische, nahezu vollständige Abdeckung des darunter befindlichen, konsolenartigen Halters der Fußstütze aus einem Blechformteil oder aus plastischem Kunststoff.

Fertigungstechnisch besonders einfach können an der Seitenwand der Abdeckung eine oder mehrere Steckverbindungen vorgesehen sein, die durch zwei von der Seitenwand zum Halter abragende Rastnasen oder Rasthaken gebildet sind, die in korrespondierende Ausnehmungen in der Seitenwand des Halters der Fußstütze einführbar sind. Die Rastnasen können unmittelbar an die Seitenwand angespritzt sein. Die als Rasthaken und Rastausnehmung gebildeten Rastpartner können auch in umgekehrter Weise vorgesehen sein.

Des Weiteren können zumindest eine oder mehrere Rastverbindungen zwischen der Abdeckung und des Halters der Fußstütze angeordnet sein, die durch federnde Rasthaken einerseits und durch korrespondierende Ausnehmungen andererseits in der Fußstütze und der Abdeckung gebildet sind. In der Betriebsstellung greifen die Rasthaken formschlüssig in die Ausnehmungen ein und halten die Abdeckung zuverlässig in Position.

Insbesondere können die Rasthaken an dem Halter der Fußstütze und die Ausnehmungen seitlich in der Abdeckung vorgesehen sein, wobei die Ausnehmungen in einer parallel zur Innenwand der A-Säule des Kraftfahrzeuges verlaufenden, nach oben abragenden, weiteren .Seitenwand der Abdeckung ausgebildet sind. Die Rasthaken können dementsprechend fertigungstechnisch günstig unmittelbar an dem Halter der Fußstütze angeformt sein, wobei die weitere Seitenwand der Abdeckung zudem eine biegefeste Aussteifung im Verbindungsbereich herstellt.

Gemäß dem kennzeichnenden Teil des Patentanspruches 1 ist das Innenverkleidungsteil eine Innenverkleidung einer A-Säule des Kraftfahrzeuges. Vorteilhaft liegt die A-Säulen-Innenverkleidung an dem Halter der Fußstütze mit montierter Abdeckung im Bereich der Rastverbindung derart an, dass ein Lösen der Rastverbindung ausgeschlossen ist. Wird die Innenverkleidung nach Montage der Fußstütze und der Abdeckung angebracht, so bildet sie zugleich eine weitere Sicherheit gegen Ablösen der Abdeckung bei gegebenenfalls auftretenden Kräften oder Verformungen an der Fußstütze. Diese zusätzliche Sicherheit wird vorteilhaft ohne jeglichen konstruktiven oder montagetechnischen Mehraufwand erzielt.

Baulich und funktionell besonders vorteilhaft kann ferner in der Basiswand der Abdeckung eine parallel und benachbart zur Innenwand der A-Säule verlaufende Nut eingeformt sein, in die ein stirnseitiger Abschnitt der Innenverkleidung der A-Säule nach deren Montage formschlüssig einragt.

Des Weiteren kann zur Herstellung eines ästhetisch ansprechenden, harmonischen Übergangs von der Innenverkleidung zur benachbarten Fußstütze die Innenverkleidung der A-Säule die nach oben abragende, die Ausnehmungen der Rastverbindung aufweisende Seitenwand überdecken.

Schließlich kann fertigungstechnisch vorteilhaft die Abdeckung im Zweikomponenten-Verfahren aus Kunststoff hergestellt sein, wobei zumindest die Bereiche der Steckverbindung und der Rastverbindung aus einem, dem jeweiligen Anwendungs-/Befestigungsfall angepassten Werkstoff als die Bereiche der Trittfläche beziehungsweise die Basiswand per se ausgeführt sein. Damit kann in einem einzigen Herstellverfahren die Abdeckung auf die spezifisch auftretenden Werkstoffbelastungen ausgelegt sein, so dass zum Beispiel eine dämpfende Unterlage unterhalb der Abdeckung so wie im eingangs genannten Stand der Technik entfallen kann.

Ein bevorzugtes Ausführungsbeispiel der Erfindung ist im Folgenden anhand der beiliegenden, schematischen Zeichnung näher erläutert. Es zeigen:
- Fig. 1: eine teilweise, raumbildliche Ansicht eines Fußraumes eines Kraftfahrzeuges mit einem am Vorderboden und benachbart einer A-Säule und eines Radhauses angeordneten Halters einer Fußstütze mit Abdeckung;
- Fig. 2: den konsolenartigen Halter der Fußstütze mit Ausnehmungen für eine seitliche Steckverbindung der Abdeckung und mit nach oben abragenden Rasthaken einer Rastverbindung;
- Fig. 3: die auf den Halter der Fußstütze zu montierende Abdeckung mit angeformten Rastnasen der Steckverbindung und mit seitlichen Ausnehmungen für die Rastverbindung; und
- Fig. 4: eine Schnittdarstellung entlang der Schnittebene I-I aus der Fig. 1.

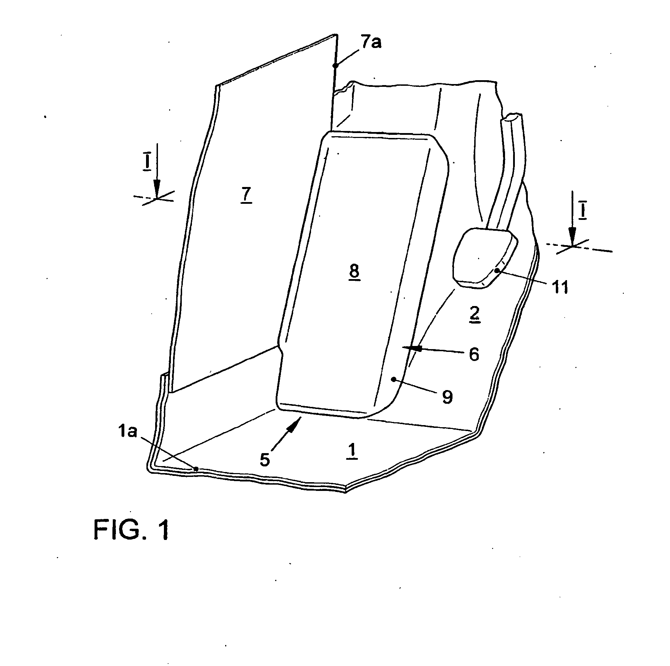

Die Fig. 1 als Übersichtszeichnung zeigt abschnittsweise einen zum Beispiel fahrerseitigen Fußraum F eines Personenkraftfahrzeuges, mit einem Boden 1, der gemäß der Fig. 1 von einem Bodenbelag 1 a überdeckt ist. Der Boden 1 geht nach vorne in einen schräg ansteigenden Vorderboden 2 über.

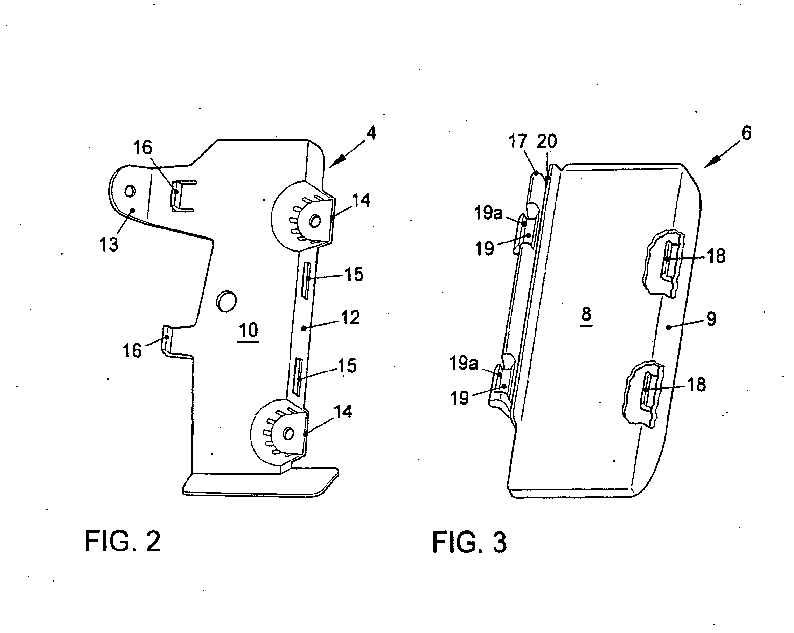

Seitlich in den Vorderboden 2 ragt ein teilweise ersichtliches Radhaus ein, an das benachbart einer A-Säule eine Fußstütze 5 mit einem Fußstützen-Halter 4 (vergleiche Fig. 2) und mit einer Abdeckung 6 (Fig. 3) angebaut ist.

Die Innenwand der A-Säule ist mit einem flächigen Innenverkleidungsteil 7 versehen, das, wie ersichtlich ist, mit einem stirnseitigen Abschnitt 7a unmittelbar an die Abdeckung 6 der Fußstütze 5 anschließt.

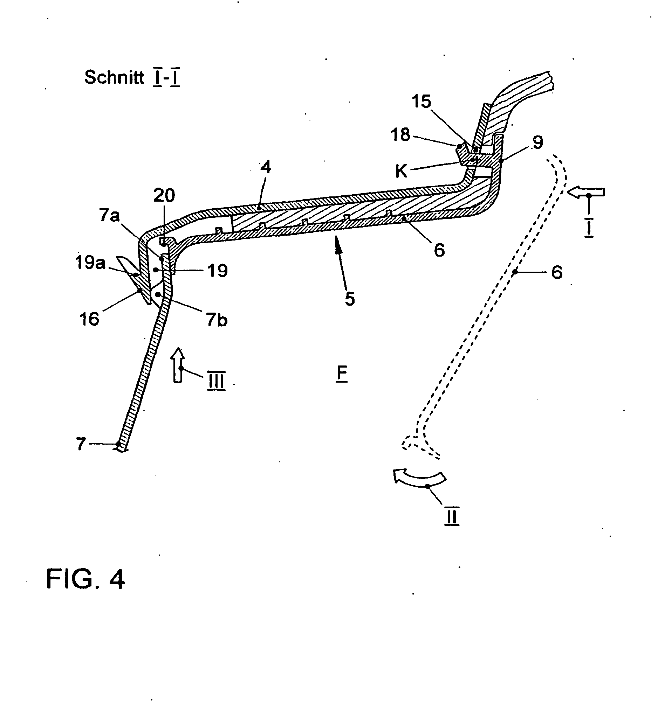

Ferner ist ersichtlich, dass die Abdeckung 6 der Fußstütze 5 den Halter 4 der Fußstütze 5 im Wesentlichen mit einer Basiswand 8 und einer Seitenwand 9 nahezu vollständig überdeckt, wobei die Basiswand 8 die dem Fahrzeuginnenraum zugewandte Trittfläche für die Fußstütze 5, 6 bildet. Zwischen der Abdeckung 6 und dem Halter 4 verläuft der Bodenbelag 1a, wie es in der Schnittdarstellung der Fig. 4 gezeigt ist.

Die Fig. 2 zeigt den konsolenartigen Halter 4 der Fußstütze 5 als Einzelteil. Der Halter 4 der Fußstütze 5 weist eine plane Auflagefläche an einer Vorderwand 10 auf, die im Wesentlichen schräg nach vorne oben und in Fahrzeugquerrichtung ergonomisch zur Abstützung eines Fußes eines Insassen des Kraftfahrzeuges ausgerichtet ist und an die eine dem Fahrzeuginnenraum (zum Beispiel dem Kupplungspedal 11 in Fig. 1) zugewandte Seitenwand 12 anschließt.

An den konsolenartigen Halter 4 der Fußstütze 5 sind u.a. eine Befestigungslasche 13 und zwei nach unten abragende, domartige Füße 14 angeformt, über die der Halter 4 der Fußstütze 5 am Vorderboden 2 und am Radhaus angeschraubt ist (nicht dargestellt).

In der Seitenwand 12 der Fußstütze 5 sind zwei voneinander beabstandete, schlitzförmige Ausnehmungen 15 eingearbeitet. Den Ausnehmungen 15 liegen zwei an die Vorderwand 10 angeformte und nach oben etwa senkrecht zur Auflagefläche 10 angeformte Rasthaken 16 auf der anderen Seite des Halters 4 gegenüber. Der obere Rasthaken 16 ist wie ersichtlich aus der Vorderwand 10 im Bereich der Befestigungslasche 13 herausgestanzt.

Die Fußstütze 5 kann aus einem Blechformteil oder aus einem formbeständigen Kunststoffmaterial hergestellt sein.

Die auf den Halter 4 der Fußstütze 5 zu montierende Abdeckung 6 (Fig. 3) setzt sich aus der Basiswand 8, der nach unten abragenden Seitenwand 9 und einer weiteren, der Seitenwand 9 gegenüberliegenden, nach oben abragenden, flanschartigen Seitenwand 17 zusammen. Die freien Randbereiche der Basiswand 8 sind wie ersichtlich ästhetisch abgekantet beziehungsweise verrundet.

An die Seitenwand 9 der Abdeckung 6 sind am unteren Randbereich zwei Rastnasen 18 angeformt (sichtbar durch die eingezeichneten Aufbrüche in der Basiswand 8). Die Rastnasen 18 korrespondieren mit den schlitzförmigen Ausnehmungen 15 an dem Halter 4. Die Rastnasen 18 sind etwa parallel zur Basiswand 8 ausgerichtet und nach außen, der Innenverkleidung 7 der A-Säule zu verlaufend, so dass sie mit den Ausnehmungen 15 eine Steckverbindung bilden.

Ferner sind in der weiteren Seitenwand 17 der Abdeckung 6 zwei Ausnehmungen 19 vorgesehen, die mit den seitlichen Rasthaken 16 an dem Halter 4 der Fußstütze 5 zusammen eine Rastverbindung für die Abdeckung 6 ergeben. Die Wirkrichtung (Montagerichtung) der Rastverbindung 16, 19 ist dabei, wie aus den Fig. 2 bis 4 ableitbar ist, etwa in Längsrichtung des Fahrzeuges, während die Montagerichtung der Steckverbindung 15, 18 senkrecht dazu in Querrichtung verläuft.

Im Übergangsbereich zwischen der Seitenwand 17 und der Basiswand 8 ist in die Basiswand 8 eine parallel dazu verlaufende Nut 20 eingeformt. Diese ist konstruktiv so ausgelegt ist, dass der stirnseitige Randbereich 7a des Innenverkleidungsteils 7 in die Nut 20 einragt und somit die Rastverbindung 16, 19 in der verrasteten Stellung hält.

Die Abdeckung 6 ist im an sich bekannten Zweikomponenten-Spritzverfahren aus Kunststoff gefertigt, wobei die Rast- und Steckverbindungsbereiche (also Bereiche der Seitenwände 9 und 17) aus Festigkeitsgründen aus härterem, plastischen Kunststoff und die übrigen Bereiche, insbesondere die Basiswand 8, aus weicherem, elastischen Kunststoff gefertigt sind, der neben gewissen Dämpfungseigenschaften auch rutschfester ist und dementsprechend eine sicherere Fußabstützung eines Insassen des Kraftfahrzeuges darstellt.

Die Montage des Halters 4 der Fußstütze 5, der Abdeckung 6 und des Innenverkleidungsteils 7 der A-Säule 4 ist wie folgt anhand der Fig. 4 erläutert:
Zunächst wird der Halter 4 der Fußstütze 5, wie vorbeschrieben, am Vorderboden 2 und am Radhaus 3 fest angeschraubt.

Sodann wird die Abdeckung 6 auf den Halter 4 der Fußstütze 5 mit deren Basiswand 8 leicht schräg angestellt aufgesetzt, wie es in der Fig. 4 gestrichelt angedeutet ist. Demzufolge liegen die Rastnasen 18 der Abdeckung 6 mit den Ausnehmungen 15 in der Seitenwand 12 des Halters 4 in einer Flucht.

Die Steckverbindung wird dann hergestellt, indem die Abdeckung 6 in einer Montagebewegung I in Querrichtung nach außen in Richtung auf die A-Säule 4 verschoben wird.

Sobald die Rasthaken 18 der Abdeckung 6 in die Ausnehmungen 15 des Halters 4 eingesteckt sind, wird durch eine Montagebewegung II in Längsrichtung nach vorne die Basiswand 8 der Abdeckung 6 auf den Halter 4 geschwenkt und somit die Rastverbindung hergestellt. Die Abdeckung 6 ist damit fertig montiert.

Schließlich wird das Innenverkleidungsteil 7 der A-Säule 4 durch nicht dargestellte Rastverbindungen montiert, wobei deren stirnseitiger Randbereich 7a mit einer Montagebewegung III nach vorne in die Nut 20 der Abdeckung 6 eingeschoben wird. Dann deckt zusätzlich das Innenverkleidungsteil 7 beziehungsweise deren Randbereich 7a die flanschartige Seitenwand 17 der Abdeckung 6 vollständig ab.

Durch das Befestigen der Innenverkleidung 7 ist die Abdeckung 6 an deren Rastverbindung 16, 19 mit dem Halter 4 der Fußstütze 5 unlösbar verbunden. Ein Lösen der Rastverbindung beziehungsweise ein Entfernen der Abdeckung 6 von der Fußstütze 5 ist nur durch vorheriges Entfernen der Innenverkleidung 7 möglich.

Die Erfindung ist nicht auf das beschriebene Ausführungsbeispiel beschränkt.

So können die Rastnasen 18 und die korrespondierenden Ausnehmungen 15 auch geometrisch anders als schlitzförmig ausgebildet sein, zum Beispiel auch stiftförmig beziehungsweise zylindrisch oder dergleichen.

Die Rasthaken 16 können in kinematischer Umkehr auch an der Abdeckung 6 ausgebildet sein, während die Ausnehmungen 19 dann an der Fußstütze 5 vorzusehen wären.

Die Anordnung der Rastnasen oder -haken zum Einführen/Montieren in den Fußstützen-Halter 4 muss nicht unbedingt seitlich unterhalb der Abdeckung sein. So kann beispielsweise auch ein einzelner größerer Haken unterhalb der Sichtfläche der Abdeckung 6 zum gleichen Ergebnis, jedoch mit anderer Montagerichtung führen. Alternativ kann die Montagerichtung auch dergestalt sein, dass mehrere kleinere oder größere Haken mit Steckung von oben in den Halter 4 mit anschließendem herunter schieben der Abdeckung montierbar sind.

### Bezugszeichenliste

- 1: Boden
- 1 a: Bodenbelag
- 2: Vorderboden
- 3: Radhaus
- 4: Halter der Fußstütze
- 5: Fußstütze
- 6: Abdeckung
- 7: Innenverkleidung
- 7a: stirnseitiger Randabschnitt
- 7b: Sperrelement
- 8: Basiswand
- 9: Seitenwand
- 10: Vorderwand
- 11: Kupplungspedal
- 12: Seitenwand
- 13: Befestigungslasche
- 14: Füße
- 15: Ausnehmungen
- 16: Rasthaken
- 17: Seitenwand
- 18: Rastnasen
- 19: Ausnehmungen
- 19a: Öffnungsrand
- 20: Nut

## Patentansprüche

1. Fußstütze für ein Fahrzeug, die im Fußraum (F) des Fahrzeugs angeordnet werden kann und einen am Fahrzeugboden (1, 2) befestigten Fußstützen-Halter (4) sowie eine auf dem Fußstützen-Halter (4) befestigte Abdeckung (6) aufweist, die eine Trittfläche (8) bildet, wobei der Fußstützen-Halter (4) und die Abdeckung (6) als Rastpartner zueinander in Rasteingriff sind, von denen der erste Rastpartner (4) zumindest ein Rastelement (16) aufweist, das in eine Rastausnehmung (19) des zweiten Rastpartners (6) eingerastet ist, **dadurch gekennzeichnet, dass** der Rasteingriff zwischen den Rastpartnern (4, 6) mittels eines an die Fußstütze (5) angrenzenden Verkleidungsteils (7) gesichert werden kann das das Rastelement (16) in seiner Verriegelungsposition hält, und dass das Verkleidungsteil (7) eine Innenverkleidung einer A-Säule des Fahrzeuges ist.

2. Fußstütze nach Anspruch 1, **dadurch gekennzeichnet, dass** das Rastelement (16) am Fußstützen-Halter (4) oder an der Abdeckung (6) ausgebildet ist, und zwischen der Verriegelungsposition und einer Entriegelungsposition, insbesondere elastisch federnd, verstellbar ist.

3. Fußstütze nach Anspruch 1 oder 2, **dadurch gekennzeichnet, dass** das Rastelement (16) in der Verriegelungsposition einen Öffnungsrand (19a) der Rastausnehmung (19) hintergreift, wobei das Verkleidungsteil (7) zum Halten des Rastelements (16) in seiner Verriegelungsposition in die Rastausnehmung (19) einragt.

4. Fußstütze nach Anspruch 1, 2 oder 3, **dadurch gekennzeichnet, dass** die Rastverbindungsstelle (16, 19) auf der vom Fußraum (F) abgewandten Seite des Verkleidungsteils (7) angeordnet ist.

5. Fußstütze nach einem der vorhergehenden Ansprüche, **dadurch gekennzeichnet, dass** einer der Rastpartner (16, 19), insbesondere die Rastausnehmung (19), an einer Seitenwand (17) der Abdeckung (6) vorgesehen ist, die von dem Verkleidungsteil (7) überlappt ist.

6. Fußstütze nach einem der vorhergehenden Ansprüche, **dadurch gekennzeichnet, dass** die Abdeckung (6) eine Nut (20) aufweist, in die ein stirnseitiger Abschnitt (7a) des Innenverkleidungsteils (7) formschlüssig einragt, der das Rastelement (16) in seiner Verriegelungsposition hält.

7. Fußstütze nach Anspruch 6, **dadurch gekennzeichnet, dass** am stirnseitigen Abschnitt (7a) des lnnenverkleidungsteils (7) ein Sperrelement (7b), insbesondere ein Vorsprung, vorgesehen ist, der das Rastelement (16) in seine Verriegelungsposition vorspannt.

8. Fußstütze.nach einem oder mehreren der vorhergehenden Ansprüche, **dadurch gekennzeichnet, dass** die Abdeckung (6) im Zweikomponenten-Verfahren aus Kunststoff hergestellt ist, wobei zumindest die Bereiche der Steckverbindung (15, 18) und der Rastverbindung (16,19) aus härterem Werkstoff als die Bereiche der Trittfläche bzw. die Basiswand (8) ausgeführt sind.

9. Fußstütze nach Anspruch 8, **dadurch gekennzeichnet, dass** mittels der Steckverbindung (15, 18) zwischen dem Fußstützen-Halter (4) und der Abdeckung (6) eine Kippachse (K) gebildet ist, um die die Abdeckung (6) in einer Montagerichtung (11) auf den Fußstützen-Halter (4) schwenkbar ist.

## Claims

1. Footrest for a vehicle, which can be arranged in the foot well (F) of the vehicle and has a footrest holder (4) which is fastened to the vehicle floor (1, 2) and a covering (6), which is fastened on the footrest holder (4) and forms a tread surface (8), wherein the footrest holder (4) and the covering (6) are in latching engagement with each other as latching partners, of which the first latching partner (4) has at least one latching element (16) which is latched into a latching recess (19) of the second latching partner (6), **characterized in that** the latching engagement between the latching partners (4, 6) can be secured by means of a trim panel (7) which is adjacent to the footrest (5) and keeps the latching element (16) in the locking position thereof, and **in that** the trim panel (7) is an interior trim of an A-pillar of the vehicle.

2. Footrest according to Claim 1, **characterized in that** the latching element (16) is formed on the footrest holder (4) or on the covering (6) and is adjustable, in particular in an elastically resilient manner, between the locking position and a release position.

3. Footrest according to Claim 1 or 2, **characterized in that**, in the locking position, the latching element (16) reaches behind an opening edge (19a) of the latching recess (19), wherein the trim panel (7) projects into the latching recess (19) in order to keep the latching element (16) in the locking position thereof.

4. Footrest according to Claim 1, 2 or 3, **characterized in that** the latching connecting port (16, 19) is arranged on that side of the trim panel (7) which faces away from the foot well (F).

5. Footrest according to one of the preceding claims, **characterized in that** one of the latching partners (16, 19), in particular the latching recess (19), is provided on a side wall (17) of the covering (6), said side wall being overlapped by the trim panel (7).

6. Footrest according to one of the preceding claims, **characterized in that** the covering (6) has a groove (20) into which an end-side section (7a) of the interior trim panel (7) projects in a form-fitting manner, said section keeping the latching element (16) in the locking position thereof.

7. Footrest according to Claim 6, **characterized in that** a blocking element (7b), in particular a projection, which prestresses the latching element (16) into the locking position thereof, is provided on the end-side section (7a) of the interior trim panel (7).

8. Footrest according to one or more of the preceding claims, **characterized in that** the covering (6) is produced from plastic in the two-component method, wherein at least the regions of the plug-in connection (15, 18) and of the latching connection (16, 19) are formed from a harder material than the regions of the tread surface and the base wall (8).

9. Footrest according to Claim 8, **characterized in that** a tilting axis (K) about which the covering (6) is pivotable in an installation direction (II) onto the footrest holder (4) is formed by means of the plug-in connection (15, 18) between the footrest holder (4) and the covering (6).

## Revendications

1. Repose-pieds pour un véhicule, qui peut être disposé dans l'espace pour les pieds (F) dans le véhicule, et qui présente un support de repose-pieds (4) fixé sur le plancher du véhicule (1, 2) ainsi qu'un recouvrement (6) fixé sur le support de repose-pieds (4), lequel recouvrement forme une surface d'appui pour les pieds (8), le support de repose-pieds (4) et le recouvrement (6) étant engagés par encliquetage l'un avec l'autre en tant que partenaires d'encliquetage, le premier partenaire d'encliquetage (4) présentant au moins un élément d'encliquetage (16) qui est encliqueté dans un évidement d'encliquetage (19) du deuxième partenaire d'encliquetage (6), **caractérisé en ce que** l'engagement d'encliquetage entre les partenaires d'encliquetage (4, 6) peut être assuré au moyen d'une pièce d'habillage (7) adjacente au repose-pieds (5), laquelle retient l'élément d'encliquetage (16) dans sa position de verrouillage, et **en ce que** la pièce d'habillage (7) est un habillage interne d'une colonne A du véhicule.

2. Repose-pieds selon la revendication 1, **caractérisé en ce que** l'élément d'encliquetage (16) est réalisé sur le support de repose-pieds (4) ou sur le recouvrement (6), et peut être réglé entre la position de verrouillage et une position de déverrouillage, notamment de manière élastique à ressort.

3. Repose-pieds selon la revendication 1 ou 2, **caractérisé en ce que** l'élément d'encliquetage (16) vient en prise par l'arrière dans la position de verrouillage avec un bord d'ouverture (19a) de l'évidement d'encliquetage (19), la pièce d'habillage (7) pénétrant dans l'évidement d'encliquetage (19) pour retenir l'élément d'encliquetage (16) dans sa position de verrouillage.

4. Repose-pieds selon la revendication 1, 2 ou 3, **caractérisé en ce que** le point de connexion par encliquetage (16, 19) est disposé sur le côté de la pièce d'habillage (7) opposé à l'espace pour les pieds (F).

5. Repose-pieds selon l'une quelconque des revendications précédentes, **caractérisé en ce que** l'un des partenaires d'encliquetage (16, 19), en particulier l'évidement d'encliquetage (19), est prévu sur une paroi latérale (17) du recouvrement (6) qui est chevauchée par la pièce d'habillage (7).

6. Repose-pieds selon l'une quelconque des revendications précédentes, **caractérisé en ce que** le recouvrement (6) présente une rainure (20) dans laquelle pénètre, par engagement positif, une portion frontale (7a) de la pièce d'habillage intérieur (7), qui retient l'élément d'encliquetage (16) dans sa position de verrouillage.

7. Repose-pieds selon la revendication 6, **caractérisé en ce qu'**un élément de blocage (7b), en particulier une saillie, est prévu sur la portion frontale (7a) de la pièce d'habillage intérieur (7), et précontraint l'élément d'encliquetage (16) dans sa position de verrouillage.

8. Repose-pieds selon l'une ou plusieurs des revendications précédentes, **caractérisé en ce que** le recouvrement (6) est fabriqué en plastique par un procédé à deux composants, au moins les régions de la connexion par enfichage (15, 18) et de la connexion par encliquetage (16, 19) étant réalisées en un matériau plus dur que les régions de la surface d'appui pour les pieds ou de la paroi de base (8).

9. Repose-pieds selon la revendication 8, **caractérisé en ce qu'**un axe de basculement (K) est formé au moyen de la connexion par enfichage (15, 18) entre le support de repose-pieds (4) et le recouvrement (6), autour duquel axe de basculement le recouvrement (6) peut pivoter dans une direction de montage (II) sur le support de repose-pieds (4).
